# EUROPEAN PATENT APPLICATION

(11) **EP 4 353 781 A1**
(43) Date of publication of application: **17.04.2024**
(21) Application number: 23202950.4
(22) Date of filing: 11.10.2023
(51) Int. Cl.: C08L 83/04, G03G 15/16

(54) **ELECTROPHOTOGRAPHIC BELT, ELECTROPHOTOGRAPHIC IMAGE FORMING APPARATUS AND CURED RUBBER PRODUCT**

(30) Priority: 12.10.2022 JP 2022163976; 19.09.2023 JP 2023151482
(71) Applicant: CANON KABUSHIKI KAISHA, Tokyo 146-8501 (JP)
(72) Inventor: BABA, Yusuke, Tokyo, 146-8501 (JP); SUZUKI, Takeshi, Tokyo, 146-8501 (JP); MAEDA, Matsutaka, Tokyo, 146-8501 (JP); HORI, Atsushi, Tokyo, 146-8501 (JP); TAKENAGA, Masahiro, Tokyo, 146-8501 (JP); MORI, Haruki, Tokyo, 146-8501 (JP); INOUE, Shota, Tokyo, 146-8501 (JP)
(74) Representative: TBK

(57) **Abstract**

An electrophotographic belt comprising: a substrate and an elastic layer on an outer peripheral surface of the substrate, the elastic layer comprising a cured rubber product including a cured silicone rubber product, an elastic modulus of the elastic layer at a temperature of 23°C being 1.00 MPa or less, wherein when 1 g sample collected from the elastic layer is immersed in 50 ml of toluene at a temperature of 23°C for 24 hours in accordance with Japanese Industrial Standard (JIS) K6258:2016, an extract of 3% by mass to 20% by mass with respect to the sample is extracted, and a burning time of the elastic layer in a burn test in accordance with UL94 VTM standard is 30 seconds or less.

## Description

### BACKGROUND

### Technical Field

The present disclosure relates to an electrophotographic belt, an electrophotographic image forming apparatus, and a cured rubber product.

### Description of the Related Art

In recent years, electrophotographic image forming apparatuses are required to be able to form high-quality electrophotographic images even on recording media with uneven surfaces such as thick paper and embossed paper having unevenness on the paper surface exceeding 100 µm. However, when an electrophotographic image is formed on the surface of a recording medium that is not smooth, the transfer of the toner image to the recesses on the surface of the recording medium may be insufficient.

Japanese Patent Application Laid-open No. 2015-052680 indicates that such problems can be effectively resolved by using an intermediate transfer belt having an elastic layer including rubber such as silicone rubber, which has excellent followability to the surface shape of the recording medium.

### SUMMARY

At least one aspect of the present disclosure is directed to providing an electrophotographic belt with a more flexible elastic layer while maintaining high flame retardance. Moreover, at least one aspect of the present disclosure is directed to providing a flexible cured rubber product having high flame retardance. Furthermore, at least one aspect of the present disclosure is directed to providing an electrophotographic image forming apparatus capable of forming a high-quality electrophotographic image even on thick paper or embossed paper having surface unevenness exceeding 100 µm.

According to at least one aspect of the present disclosure, there is provided an electrophotographic belt as specified in claims 1 to 9.

According to at least one aspect of the present disclosure, there is provided a cured rubber product as specified in claims 11 to 15.

According to at least one aspect of the present disclosure, there is provided an electrophotographic image forming apparatus as specified in claim 10.

Further features of the present disclosure will become apparent from the following description of exemplary embodiments with reference to the attached drawings.

### BRIEF DESCRIPTION OF THE DRAWINGS

FIG. 1 is a cross-sectional view showing an example of an electrophotographic image forming apparatus using an electrophotographic member;
FIG. 2A is a perspective view of an intermediate transfer belt 200 and FIG. 2B is a cross-sectional view at a portion (b) of the perspective view shown in FIG. 2A;
FIGS. 3A and 3B show unsaturated aliphatic groups in side chains of an organopolysiloxane; and
FIG. 4 is an example of ¹H-NMR peaks of an organopolysiloxane with vinyl groups.

### DESCRIPTION OF THE EMBODIMENTS

In the present disclosure, unless otherwise specified, the descriptions of "from XX to YY" and "XX to YY" that represent numerical ranges mean numerical ranges that include the lower and upper limits that are endpoints. Moreover, when a numerical range is described stepwise, the upper limit and lower limit of each numerical range can be combined arbitrarily. In addition, in the present disclosure, for example, descriptions such as "at least one selected from the group consisting of XX, YY and ZZ" include XX, YY, ZZ, a combination of XX and YY, a combination of XX and ZZ, a combination of YY and ZZ or a combination of XX and YY and ZZ.

In the studies conducted by the present inventors, it was found that the intermediate transfer belt having an elastic layer according to Japanese Patent Application Laid-open No. 2015-052680 has flexibility that is still insufficient for forming high-quality electrophotographic images on thick paper and embossed paper with a paper surface unevenness exceeding 100 µm. Therefore, the present inventors have studied how to further improve the flexibility of the elastic layer including silicone rubber.

However, in the process of the study, it was found that flame retardance of the elastic layer including silicone rubber may be relatively lowered as the flexibility of the elastic layer is improved. In particular, it is effective to increase the transfer voltage in order to improve the secondary transferability with respect to paper having unevenness exceeding 100 µm, but when the transfer voltage is increased, a high voltage is applied to the intermediate transfer belt, so that the intermediate transfer belt is required to have high flame retardance.

The inventors presumed that the reason why the flame retardance of the elastic layer decreases when the flexibility of the elastic layer including a cured silicone rubber product is increased is as follows. A method of lowering the degree of crosslinking of a cured silicone rubber product is known as a method for improving the flexibility of the elastic layer including the cured silicone rubber product.

Specifically, there is a method of adjusting the mixing ratio between an organopolysiloxane having a partial structure in which an unsaturated aliphatic group is bonded to a silicon atom (hereinafter also referred to as "first organopolysiloxane"), and an organopolysiloxane having a partial structure (hereinafter referred to as "Si-H group") in which a hydrogen atom is bonded to a silicon atom (hereinafter also referred to as "second organopolysiloxane") which are constituent portion of an addition-curable liquid silicone rubber (hereinafter also simply referred to as "liquid silicone rubber"), which is a raw material for a cured silicone rubber product.

In the addition-curable liquid silicone rubber, a crosslinked structure is formed as a result of a hydrosilylation reaction of the hydrogen atoms bonded to the silicon atoms in the second organopolysiloxane with the unsaturated aliphatic groups in the first organopolysiloxane. Therefore, the degree of crosslinking of the cured silicone rubber product can be lowered by decreasing the molar ratio of Si-H groups to unsaturated aliphatic groups (hereinafter sometimes referred to as "H/Vi") in the liquid silicone rubber. At this time, the cured silicone rubber product includes a certain amount of unreacted first organopolysiloxane.

The inventors presumed that the decrease in flame retardance of the cured silicone rubber product made more flexible by the above method was caused by the unreacted first organopolysiloxane contained in the cured rubber product. That is, the present inventors have found that the stability of an unsaturated aliphatic group varies depending on the position of the unsaturated aliphatic group in the first organopolysiloxane. Specifically, comparing the case where an unsaturated aliphatic group is present in the side chain portion of the first organopolysiloxane in the cured rubber product with the case where the unsaturated aliphatic group is present in the end portion, the present inventors have found that the flame retardance of the cured rubber product is likely to be lowered when the unsaturated aliphatic group is bonded to the side chain portion.

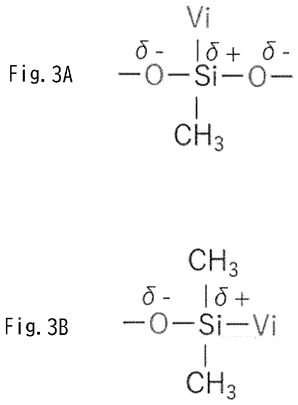

Although it is not clear why an organopolysiloxanes having an unsaturated aliphatic group in a side chain has lower flame retardance than an organopolysiloxane having the unsaturated aliphatic group at the end, the present inventors presumed the following. As shown in FIG. 3A, two highly electronegative oxygen atoms are bonded to a silicon atom to which the unsaturated aliphatic group (vinyl group Vi) present in the side chain of the organopolysiloxane is bonded. Meanwhile, as shown in FIG. 3B, only one oxygen atom is bonded to the silicon atom to which the unsaturated aliphatic group (vinyl group Vi) present at the end of the organopolysiloxane is bonded. Therefore, it is considered that the positive polarity of the silicon atom to which the unsaturated aliphatic group is bonded is stronger in the silicon atom to which the unsaturated aliphatic group present in the side chain is bonded.

Therefore, it is considered that since the π electrons of the unsaturated aliphatic group in the structure shown in FIG. 3A are more strongly attracted to the silicon atom side, the stability is lowered as compared with the unsaturated aliphatic group in the structure shown in FIG. 3B. It is considered that this is the reason why the flame retardance of the cured rubber product decreases with the increase in the number of unsaturated aliphatic groups of the first organopolysiloxane remaining in the cured rubber product that are present in the side chain portions of the first organopolysiloxane.

As a result of further studies by the present inventors based on the above knowledge, it was found that by satisfying the following requirements, an electrophotographic belt having a more flexible elastic layer while maintaining high flame retardance can be obtained and a cured rubber product having both flexibility and flame retardance at a higher level can be obtained.

That is, the electrophotographic belt according to one aspect of the present disclosure satisfies the following requirements (i) to (v).
(i) The electrophotographic belt comprises a substrate and an elastic layer on the outer peripheral surface of the substrate.
(ii) The elastic layer includes a cured rubber product including a cured silicone rubber product.
(iii) An elastic modulus of the elastic layer at a temperature of 23°C is 1.00 MPa or less.
(iv) When a 1 g sample collected from the elastic layer is immersed in 50 ml of toluene at a temperature of 23°C for 24 h in accordance with Japanese Industrial Standard (JIS) K6258:2016, an extract of from 3% by mass to 20% by mass with respect to the sample is extracted.
(v) A burning time of the elastic layer in a burn test in accordance with UL94 VTM standard is 30 sec or less.

In addition, the rubber cured product according to one aspect of the present disclosure satisfies the following requirements (vi) to (viii).

Requirement (vi): The cured rubber product has the elastic modulus at a temperature of 23°C of 1.00 MPa or less.

Requirement (vii): When a 1 g sample taken from the rubber cured product is immersed in 50 ml of toluene at a temperature of 23°C for 24 h in accordance with Japanese Industrial Standard (JIS) K6258:2016, an extract of from 3% by mass to 20% by mass with respect to the sample is extracted.

Requirement (viii): The cured rubber product has a burning time in a burn test in accordance with UL94 VTM standard of 30 sec or less.

When the elastic modulus of the elastic layer or cured rubber product at a temperature of 23°C is 1.00 MPa or less, it can be said that the elastic layer or cured rubber product is more flexible. Therefore, when the electrophotographic belt according to one aspect of the present disclosure is used as an intermediate transfer belt, an unfixed toner image can be transferred with higher efficiency even to the surface of the recording material having surface unevenness exceeding 100 µm.

Although the lower limit of the elastic modulus is not particularly limited, it is preferably, for example, 0.18 MPa or more. When the elastic modulus is 0.18 MPa or more, the cured rubber product easily satisfies practical rubber strength. Specifically, for example, a strength sufficient for the elastic layer of the electrophotographic belt can be imparted to the cured rubber product. Therefore, the elastic modulus of the cured rubber product or elastic layer is preferably from 0.18 MPa to 1.00 MPa, more preferably from 0.18 MPa to 0.50 MPa.

The elastic modulus can be controlled, for example, by adjusting the amount of the crosslinked structure of the cured rubber product by adjusting the H/Vi ratio of the liquid silicone rubber, as described above. That is, by increasing H/Vi to further develop the crosslinked structure in the cured rubber product, the elastic modulus can be controlled to be increased. Also, by reducing H/Vi to reduce the degree of development of the crosslinked structure in the cured rubber product, the elastic modulus can be controlled to be decreased.

Here, in the addition-curable liquid silicone rubber, the molar ratio (H/Vi) of the moiety (Si-H group) where the hydrogen atom is directly bonded to the silicon atom to the unsaturated aliphatic group is preferably from 0.5 to 1.5. By setting H/Vi to 0.5 or more, it becomes easy to set the elastic modulus of the cured rubber product to 0.18 MP or more, which is the preferable lower limit value described above. Meanwhile, by setting H/Vi to 1.5 or less, it becomes easy to set the elastic modulus of the cured rubber product to 1.00 MPa or less, which is the upper limit value described abo.

Also, when a 1 g sample collected from the elastic layer or a 1 g sample collected from the cured rubber product is immersed in 50 ml of toluene at a temperature of 23°C for 24 h in accordance with Japanese Industrial Standard (JIS) K6258:2016, an extract constituting from 3% by mass to 20% by mass of the mass (1 g) of the sample is extracted. The amount of the extract can be calculated from the mass after immersing 1 g of the sample collected from the elastic layer or 1 g of the sample collected from the cured rubber product in 50 ml of toluene at 23°C for 24 h in accordance with Japanese Industrial Standard (JIS) K6258:2016 and the mass before the immersion.

The extract is considered to be an unreacted component in the cured silicone rubber product contained in the elastic layer or the cured rubber product. It is believed that the amount of the extract reflects the amount of unreacted portion of the first organopolysiloxane used as one of the raw materials for the cured silicone rubber product. It is considered that such unreacted first organopolysiloxane is inevitably contained in a cured rubber product when the cured rubber product having an elastic modulus of 1.00 MPa or less is obtained using addition-curable liquid silicone rubber.

That is, it is considered that in the cured rubber product with an amount of extract of less than 3% by mass, most of the unsaturated aliphatic groups in the first organopolysiloxane are hydrosilylated due to an excessively large H/Vi value in the addition-curable liquid silicone rubber. As a result, the elastic modulus of the cured rubber product may exceed 1.00 MPa. Meanwhile, it is considered that in the cured rubber product with an amount of extract above 20% by mass, most of the unsaturated aliphatic groups in the first organopolysiloxane remain in an unreacted state because H/Vi in the addition-curable liquid silicone rubber is too small. Such a rubber cured product may have insufficient strength as a result of the degree of development of the crosslinked structure being too low.

Also, the burning time of the cured rubber product or elastic layer in a burn test based on UL94 VTM standard is 30 sec or less. When the burning time is within the above range, the elastic layer or cured rubber product can have more sufficient flame retardance. In the case of an electrophotographic belt, where the burning time of the elastic layer is 30 sec or less, the voltage during secondary transfer can be sufficiently increased. As a result, it is possible to transfer the unfixed toner image to the surface of the recording material having surface unevenness exceeding 100 µm with higher efficiency. The shorter the burning time, the better, and the lower limit is not particularly limited, but is, for example, 1 sec. Therefore, a preferable burning time range is, for example, from 1 sec to 30 sec, in particular from 1 sec to 21 sec, and further from 1 sec to 15 sec. UL94 VTM standard is a standard for evaluating the burning characteristics of plastic materials specified in the vertical burn test for thin materials (vertical burn test for plastic films) specified in ASTM D4804.

As described above, the flexible cured silicone rubber product inevitably contains an unsaturated aliphatic group-containing organopolysiloxane (first organopolysiloxane), which is one of raw materials thereof. The flame retardance of the elastic layer or the cured rubber product can be adjusted by adjusting the position of the unsaturated aliphatic group of the first organopolysiloxane as an unreacted component in the cured silicone rubber product contained in the elastic layer or the cured rubber product.

That is, for example, where the unsaturated aliphatic group is a vinyl group, the extract obtained when a 1 g sample collected from the cured rubber product or a 1 g sample collected from the elastic layer is immersed in 50 ml of toluene at a temperature of 23°C for 24 h in accordance with Japanese Industrial Standard (JIS) K6258:2016, includes at least two organopolysiloxanes selected from the group consisting of an organopolysiloxane having a first structure represented by a following formula (1), an organopolysiloxane having a second structure represented by a following formula (2), and an organopolysiloxane having a first structure represented by the following formula (1) and a second structure represented by the following formula (2).

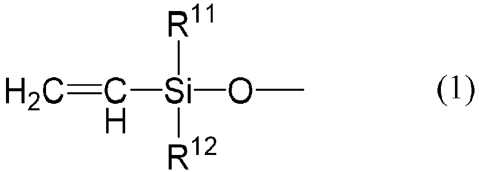

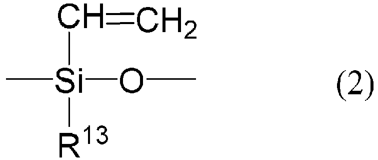

In formulas (1) and (2), R¹¹, R¹², and R¹³ each independently represent an unsubstituted or substituted monovalent hydrocarbon group that does not contain an unsaturated aliphatic group. Specific examples of the hydrocarbon group include the following.
- An alkyl group (having preferably from 1 to 6 carbon atoms, more preferably from 1 to 3 carbon atoms, more preferably 1 or 2 carbon atoms), such as a methyl group, an ethyl group, a propyl group, a butyl group, a pentyl group, a hexyl group, etc.);
- An aryl group (a phenyl group, a naphthyl group, etc.).

The substituents are the same as described for R¹ above. 50% or more of R¹¹, R¹², and R¹³ are preferably methyl groups. More preferably, R¹¹, R¹², and R¹³ are methyl groups.

Formula (1) shows the structure when the unsaturated aliphatic group of the first organopolysiloxane is present at the end of the molecule. Formula (2) shows the structure when the unsaturated aliphatic group of the first organopolysiloxane is present in the side chain. Where A is the number of moles of the first structure in the organopolysiloxane in the extract, and B is the number of moles of the second structure in the extract, B/(A + B) is preferably from 0.1 to 0.5, and more preferably from 0.1 to 0.3.

Where B/(A + B) is 0.5 or less, half or more of all the unsaturated aliphatic groups in the first organopolysiloxane in the extract will be present at the ends of the molecules. Since the unsaturated aliphatic groups present at the ends of the molecules are relatively stable as described above, the deterioration of the flame retardance of the elastic layer or cured rubber product can be prevented. Further, B/(A + B) being 0.1 or more means that the cured rubber product can have a three-dimensional network structure developed so that the cured rubber product has sufficient strength enabling application to, for example, the elastic layer of an electrophotographic belt.

That is, the organopolysiloxane contained in the extract is an unreacted component of the addition-curable liquid silicone rubber used as the raw material for the cured rubber product. Therefore, the cured silicone rubber product in the elastic layer or the cured rubber product is also a reaction product of the organopolysiloxane having B/(A + B) of 0.1 or more and the crosslinking agent. Therefore, by using an organopolysiloxane having a certain amount of unsaturated aliphatic groups in the side chains as one of the raw materials for the cured silicone rubber product, the cured silicone rubber product will have a certain degree of three-dimensional network structure. As a result, the cured silicone rubber product can have sufficient strength derived from the three-dimensional network structure.

The ratio B/(A + B) in the extract can be calculated, for example, by performing hydrogen nuclear measurement (¹H-NMR) using a nuclear magnetic resonance apparatus. An example in which the unsaturated aliphatic group is a vinyl group will be described below. In the present disclosure, the unsaturated aliphatic group is not limited to a vinyl group. Since the three hydrogen atoms of the vinyl group present in the side chain portion of the organopolysiloxane shown in FIG. 3A (denoted by "Vi" in FIGS. 3A and 3B) are non-equivalent, these atoms are spin-coupled with each other.

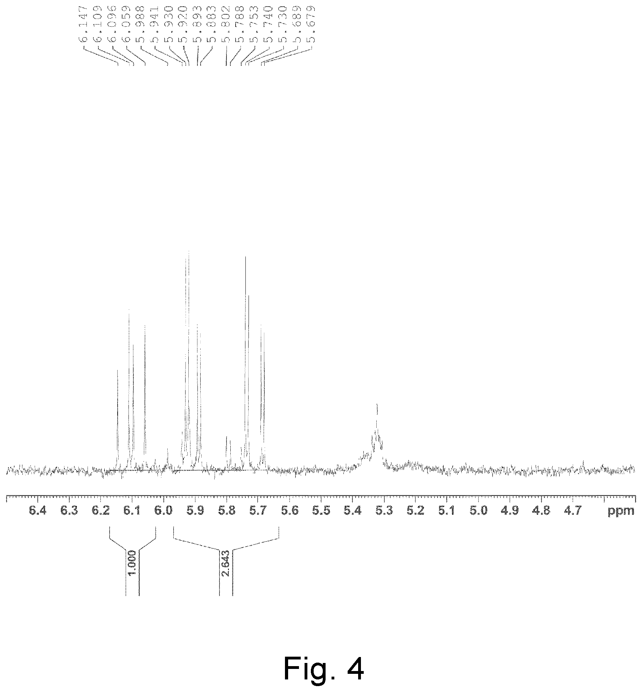

Therefore, the peaks to be attributed are separated and detected at 5.74, 5.76, 5.79, 5.80, 5.88, 5.90, 5.92, 5.93, 5.94, 5.98, 5.99 and 6.03 ppm from the low chemical shift side (FIG. 4). The peaks separated and detected in such chemical shifts are characteristic of the vinyl group introduced into the side chain portion of a silicone compound.

In addition, the three hydrogen atoms of the vinyl group present at the end of the organopolysiloxane shown in FIG. 3B are non-equivalent as well. For this reason, spin coupling occurs therebetween, but the chemical shifts of the peaks appear at positions different from those of the side chain structure. The peaks attributed to the hydrogen atoms of the end vinyl group are separated and detected at 5.68, 5.69, 5.73, 5.74, 5.89, 5.90, 5.92, 5.93, 6.06, 6.10, 6.11 and 6.15 ppm (FIG. 4). The peaks separated and detected in such chemical shifts are characteristic of hydrogen atoms of the vinyl group introduced at the end portion of a silicone compounds.

As indicated above, in ¹H-NMR, both the hydrogen atoms of the vinyl group present in the side chain and the hydrogen atoms of the vinyl group present at the end are detected with overlapping peaks in the range of from 5.68 ppm to 6.03 ppm. However, the peaks appearing in the chemical shift range of from 6.06 ppm to 6.15 ppm are due to one of the three hydrogen atoms of the vinyl group present at the end. Therefore, the number obtained by multiplying the integrated value of the peaks in this region by the number of hydrogen atoms, that is, by three, will be the number of moles A of the vinyl groups present at the ends.

Further, the number of moles B of the vinyl groups present in the side chains will be obtained by subtracting the value obtained by multiplying the integrated values of the peaks in the range of from 6.06 ppm to 6.15 ppm by two, which corresponds to two hydrogen atoms of the vinyl group present at the end, from the integrated value of the peaks appearing in the range of from 5.68 ppm to 6.03 ppm. Therefore, the ratio of the number of moles of the vinyl groups present in the side chains in the extract to the total number of moles of vinyl groups can be determined by (B/(A + B)).

### Liquid Silicone Rubber (Mixture)

Next, the addition-curable liquid silicone rubber that provides the elastic layer or cured rubber product and the liquid silicone rubber mixture containing the liquid silicone rubber will be described. The elastic layer or cured rubber product includes a cured liquid silicone rubber. Such elastic layer or rubber cured product may be, for example, a cured product of liquid silicone rubber only, or a cured product of a liquid silicone rubber mixture including the liquid silicone rubber and other optional components.

In the present disclosure, the liquid silicone rubber is assumed to include the first organopolysiloxane, the second organopolysiloxane, a catalyst necessary for the hydrosilylation reaction of the first organopolysiloxane and the second organopolysiloxane, and an optionally added inhibitor. Also, a mixture of the liquid silicone rubber and optional components described hereinbelow is called a liquid silicone rubber mixture.

The liquid silicone rubber contains, for example, the following components (a), (b) and (c) as essential components, and optionally contains component (d). For example, the cured rubber product may be a cured product of an addition-curable liquid silicone rubber including components (a), (b) and (c).
- Component (a): an organopolysiloxane having an unsaturated aliphatic group (first organopolysiloxane);
- Component (b): an organopolysiloxane having a hydrosilyl group (second organopolysiloxane);
- Component (c): a hydrosilylation catalyst;
- Component (d): an inhibitor (curing inhibitor).

### Component (a)

Any organopolysiloxane having an unsaturated aliphatic group such as a vinyl group can be used as the organopolysiloxane having an unsaturated aliphatic group. For example, compounds represented by structural formulas 1 and 2 below can be used as component (a).
- A linear organopolysiloxane having either or both intermediate units selected from the group consisting of intermediate units represented by R₁R₁SiO and intermediate units represented by R₁R₂SiO, and molecular ends represented by R₁R₁R₂SiO_{1/2} (see structural formula 1 below). 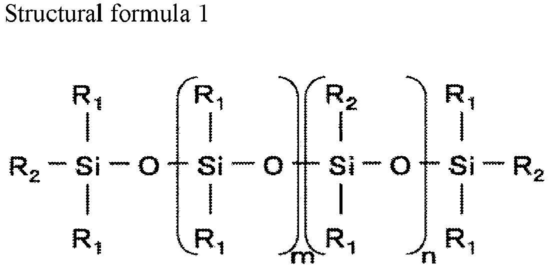
- A linear organopolysiloxane having either or both intermediate units selected from the group consisting of intermediate units represented by R₁R₁SiO and intermediate units represented by R₁R₂SiO, and molecular ends represented by R₁R₁R₁SiO_{1/2} (see structural formula 2 below).

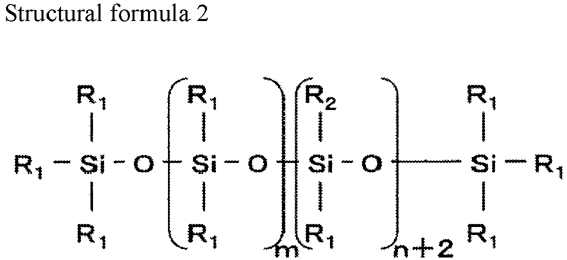

In structural formula 1 and structural formula 2, each R₁ directly bonded to a silicon atom independently represents an unsubstituted or substituted monovalent hydrocarbon group that does not contain an unsaturated aliphatic group. Each R₂ independently represents an unsaturated aliphatic group, and each m and n independently represent an integer of 0 or more.

Examples of the unsubstituted hydrocarbon group containing no unsaturated aliphatic group that is represented by R₁ in structural formula 1 and structural formula 2 include an alkyl group and an aryl group. The alkyl group preferably has from 1 to 6 carbon atoms, particularly preferably from 1 to 3 carbon atoms, more preferably 1 or 2 carbon atoms, and the preferred examples include a methyl group, an ethyl group, a propyl group, a butyl group, a pentyl group, and a hexyl group. Examples of aryl groups include, for example, a phenyl group and a naphthyl group. Among the above groups, 50% or more of R₁ are preferably methyl groups, and more preferably all R₁ are methyl groups because the organopolysiloxanes are easy to synthesize and handle and a cured silicone rubber product having excellent heat resistance can be obtained.

Further, examples of the substituted monovalent hydrocarbon group having no unsaturated aliphatic group include hydrocarbon groups obtained by substituting at least one of the hydrogen atoms of the above hydrocarbon group with a halogen atom such as a fluorine atom or a chlorine atom, an alkoxy group such as a methoxy group or an ethoxy group, or a cyano group.

Specific examples include a chloromethyl group, a 3-chloropropyl group, a 3,3,3-trifluoropropyl group, a 3-cyanopropyl group, and a 3-methoxypropyl group.

Further, in structural formula 1 and structural formula 2, examples of the unsaturated aliphatic group represented by R₂, which is directly bonded to the silicon atom, include a vinyl group, an allyl group, a 3-butenyl group, a 4-pentenyl group, and a 5-hexenyl group. Among these, a vinyl group is preferable because it is easy to synthesize and handle, and the crosslinking reaction of the liquid silicone rubber proceeds more easily.

A linear organopolysiloxane with n = 0 in structural formula 1 has an unsaturated aliphatic group only at both ends, and a linear organopolysiloxane with n = 1 or more has an unsaturated aliphatic group at both ends and in the side chains. The straight-chain organopolysiloxane represented by structural formula 2 has an unsaturated aliphatic group only in the side chains.

In the liquid silicone rubber of the present disclosure, at least two organopolysiloxanes selected from the group of three kinds of organopolysiloxanes consisting of a linear organopolysiloxane represented by the above structural formula 1 and having n = 0, a linear organopolysiloxane represented by the above structural formula 1 and having n = 1 or more, and a linear organopolysiloxane represented by the above structural formula 2 are mixed as component (a) preferably so that B/(A + B) in the liquid silicone rubber is from 0.1 to 0.5, in particular, from 0.1 to 0.3.

By adjusting the B/(A + B) in the liquid silicone rubber within the above range, the burning time in the burn test based on UL94 VTM standard can be easily set to 30 seconds or less while having an elastic modulus of the elastic layer or the rubber cured product of 1.00 MPa or less at a temperature of 23°C. Further, as a result of setting B/(A + B) in the liquid silicone rubber within the above range, the three-dimensional crosslinked structure of the silicone rubber in the elastic layer or cured rubber product can be developed to be sufficient for imparting the elastic layer or cured rubber product with the required strength.

From the standpoint of moldability, the viscosity of component (a) is preferably from 100 mm²/s to 50000 mm²/s. The viscosity (kinematic viscosity) can be measured using a capillary viscometer, a rotational viscometer, or the like, based on Japanese Industrial Standard (JIS) Z8803:2011. Moreover, when using a commercial item as a component (a), it is possible to refer to a catalog value.

The polystyrene-equivalent number-average molecular weight of component (a) is preferably from 10000 to 200000, more preferably from 30000 to 120000. The molar equivalent of the unsaturated aliphatic groups (preferably vinyl groups) in component (a) is preferably from 0.02 mmol/g to 0.50 mmol/g, more preferably from 0.05 mmol/g to 0.35 mmol/g.

### Component (b)

The organopolysiloxane having a Si-H group, which is the component (b), is a crosslinking agent for forming a crosslinked structure by a hydrosilylation reaction with the unsaturated aliphatic groups of the component (a) in the presence of the hydrosilylation catalyst, which is component (c).

Any organopolysiloxane having a Si-H group can be used as the component (b). For example, those satisfying the following conditions can be preferably used.

In addition, one kind of component (b) may be used or two or more kinds may be used in combination.
- From the viewpoint of forming of a crosslinked structure by reaction with an organopolysiloxane having an unsaturated aliphatic group, the number of hydrogen atoms bonded to silicon atoms is three or more per molecule on average.
- The organic group bonded to the silicon atom can be exemplified by, for example, an unsubstituted hydrocarbon group as described above, but the organic group is preferably a methyl group.
- The siloxane skeleton (-Si-O-Si-) may be linear, branched or cyclic.
- The Si-H bond may be present in any siloxane unit in the molecule.

The siloxane skeleton of component (b) may be linear, branched, or cyclic, and a mixture of two or more kinds of organosiloxanes having these skeletons may be used. In particular, from the viewpoint of ease of synthesis, a straight-chain skeleton is preferred. As component (b) having a straight-chain siloxane skeleton, for example, straight-chain organopolysiloxanes represented by structural formula 3 and structural formula 4 below can be used.

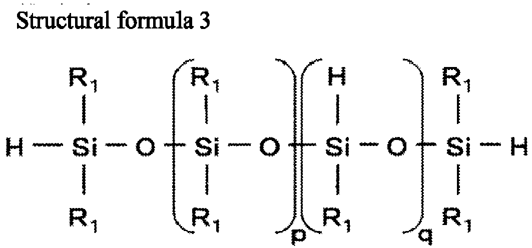

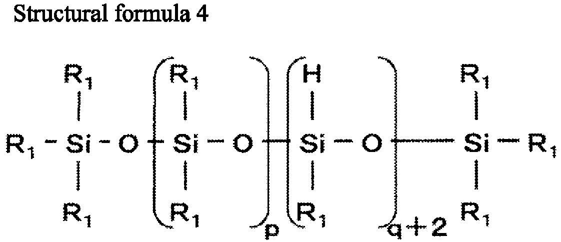

The definition of R₁ in structural formula 3 and structural formula 4 is the same as that of R₁ in structural formula 1 and structural formula 2. p represents an integer of 0 or more, and q represents an integer of 1 or more.

In component (b), the number of Si-H groups is preferably at least 2 per molecule, and preferably 3 or more per molecule on average. The viscosity of component (b) at a temperature of 25°C is preferably in the range of from 10 mm²/s to 100000 mm²/s, more preferably from 15 mm²/s to 1000 mm²/s. Where the viscosity is 10 mm²/s or more, the organopolysiloxane is less likely to volatilize during storage, and the desired degree of crosslinking and physical properties can be easily obtained in the resulting cured product. Further, when the viscosity is 100000 mm²/s or less, the organopolysiloxane can be easily handled and uniformly dispersed in the system.

The polystyrene-equivalent number-average molecular weight of component (b) is preferably from 300 to 10000, more preferably from 1000 to 2000.

In component (b), the Si-H group may be present in any siloxane unit in the molecule, but an organopolysiloxane in which at least one of the Si-H groups is present at the molecular end of organopolysiloxane, as in the (R₁)₂HSiO_{1/2} unit, as shown in structural formula 3 is preferred, and it is particularly preferable to use an organopolysiloxane in which both ends have a structure represented by (R₁)₂HSiO_{1/2}.

The intermediate unit is selected from (R₁)₂SiO and R₁HSiO. The intermediate unit preferably includes mainly (R₁)₂SiO. Component (b) may be a branched organopolysiloxane including R₁SiO_{3/2} or SiO_{4/2} in intermediate units. R₁ is the same as in component (a).

The mixing ratio of component (a) and component (b) in the liquid silicone rubber is not particularly limited, but it is preferred that H/Vi be from 0.5 to 1.5.

By setting H/Vi to 0.5 or more, it becomes easy to set the elastic modulus of the elastic layer or cured rubber product to 0.18 MP, which is the preferred lower limit value mentioned hereinabove, or above it. Meanwhile, by setting H/Vi to 1.5 or less, it becomes easy to set the elastic modulus of the cured rubber product to 1.00 MPa, which is the upper limit mentioned hereinabove, or below it.

The abundance ratio (H/Vi) of unsaturated aliphatic groups and Si-H groups in the liquid silicone rubber can be confirmed by hydrogen nuclear measurement (H-NMR) using a nuclear magnetic resonance spectrometer (NMR). For example, when the unsaturated aliphatic group is a vinyl group, the peaks derived from the vinyl groups are detected at a chemical shift of from 5.6 ppm to 6.2 ppm, so the integrated value thereof can be considered as the amount of hydrogen nuclei derived from the vinyl groups. In addition, since the Si-H group-derived peaks are detected in the chemical shift range of from 4.6 ppm to 4.7 ppm, the integrated value thereof can be considered as the amount of Si-H group-derived hydrogen nuclei.

Since the vinyl group has three hydrogen atoms on structure thereof, the value of H/Vi can be calculated by using the numerical value obtained by dividing the integrated value of the vinyl group by three as the denominator and using the integrated value derived from the Si-H group as the numerator. For the nuclear magnetic resonance apparatus, for example, "Avance 400" (trade name, manufactured by BRUKER) or "AL400 type FT-NMR" (trade name, manufactured by JEOL Ltd.) can be used.

### Component (c)

Examples of component (c) include known substances such as platinum compounds and rhodium compounds. A platinum catalyst such as, for example, a platinum carbonylcyclovinylmethylsiloxane complex is preferred. The amount of component (c) is not particularly limited and may be changed, as appropriate, in consideration of the reactivity of the liquid silicone rubber.

### Component (d)

Component (d) is a reaction inhibitor for adjusting (delaying) the rate of hydrosilylation reaction between the unsaturated aliphatic group and the Si-H group to allow the reaction to proceed more uniformly and is added as necessary. The compound is not particularly limited as long as it is a compound that can control the rate of the hydrosilylation reaction, and for example, 1-ethynyl-1-cyclohexanol or the like can be used.

### Optional Components

In order to impart further functionality to the elastic layer or cured rubber product, optional components may be included as long as it does not deviate from the gist of the present disclosure. Examples of such functionality include, for example, higher flame retardance, higher mechanical strength, and electrical conductivity. For example, inorganic particles of at least one kind selected from the group consisting of aluminum hydroxide, magnesium hydroxide, zinc hydroxide, calcium hydroxide, magnesium oxide, titanium oxide, iron oxide, zinc oxide, alumina, and silica can be effectively used in order to impart better flame retardance and mechanical strength to the elastic layer or cured rubber product.

The total content of the inorganic particles in the elastic layer or cured rubber product is not particularly limited as long as it does not deviate from the gist of the present disclosure. Specifically, the total content of the inorganic particles in the elastic layer or cured rubber product is not particularly limited as long as the elastic modulus of the elastic layer or cured rubber product does not exceed 1.00 MPa. The total content of the inorganic particles in the elastic layer or cured rubber product is preferably more than 0% by mass and 40% by mass or less, particularly more than 0% by mass and 30% by mass or less based on the elastic layer or cured rubber product.

In addition, in order to impart electrical conductivity to the elastic layer or cured rubber product, it is effective to include at least one conductive agent selected from the group consisting of an electronic conductive agent and an ionic conductive agent in the elastic layer or cured rubber product. When the electrophotographic belt according to the present disclosure is used as an intermediate transfer belt, the elastic layer is preferably made conductive so that surface resistivity thereof is in the range of 1×10¹⁰ Ω/□ to 1 × 10¹² Ω/□.

For example, at least one selected from the group consisting of carbon black, graphite, graphene, carbon fibers, carbon nanotubes, metal powders such as silver, copper, and nickel, conductive zinc oxide, conductive calcium carbonate, conductive titanium oxide, conductive tin oxide, and conductive mica can be used as the electronic conductive agent. Among the abovementioned electronic conductive agents, for example, at least one conductive carbon black selected from the group consisting of acetylene black and Ketjen black can be preferably used from the viewpoint of ease of control of electrical resistance.

When carbon black is used as the electronic conductive agent, the total content of carbon black is preferably from 0.1% by mass to 5.0% by mass, particularly from 0.5% by mass to 3.0% by mass relative to the elastic layer or cured rubber product. Within this range, the addition of carbon black does not substantially affect the elastic modulus and flame retardance of the elastic layer or cured rubber products.

Also, an ionic conductive agent may be used as the conductive agent. Examples of ionic conductive agents include lithium salts, potassium salts, and also pyridine-based, alicyclic amine-based, and aliphatic amine-based ionic liquids. Among the above ionic conductive agents, ionic liquids are preferable from the viewpoint of environmental stability and suppression of polarization due to durability. The total content of the ion-conducting agent is preferably from 1% by mass to 10% by mass relative to the elastic layer or cured rubber product. Within this range, the addition of the ionic conductive agent hardly has a substantial effect on the elastic modulus and flame retardance of the elastic layer or cured rubber product.

Furthermore, the elastic layer or cured rubber product may include other rubber components as long as it does not deviate from the gist of the present disclosure.

Other rubber components include, for example, natural rubber, styrene-butadiene rubber, butadiene rubber, isoprene rubber, nitrile rubber, chloroprene rubber, butyl rubber, ethylene-propylene rubber, chlorosulfonated rubber, acrylate rubber, epichlorohydrin rubber, urethane rubber, fluorine rubber, and the like.

### Electrophotographic Members

Next, an electrophotographic belt will be explained. An electrophotographic belt has a substrate and an elastic layer on the substrate. An electrophotographic belt can be exemplified by an intermediate transfer belt. The shape of the intermediate transfer belt is not particularly limited and may be, for example, cylindrical, columnar, or endless belt. Preferably, the intermediate transfer belt is endless. The intermediate transfer belt preferably has an endless substrate and an elastic layer on the outer peripheral surface of the substrate.

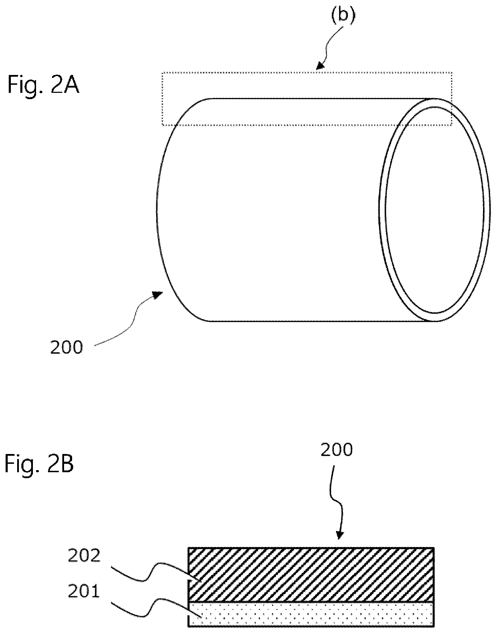

FIGS. 2A and 2B are schematic configuration diagrams of an intermediate transfer belt 200 having an endless belt shape according to one aspect of the present disclosure. The intermediate transfer belt 200 is composed of an endless belt-shaped substrate 201 and an elastic layer 202 formed on the outer peripheral surface thereof. A surface layer (not shown) can be further provided on the outer peripheral surface of the elastic layer 202 as necessary.

### Substrate

As the substrate 201, one having a cylindrical shape, a columnar shape, or an endless belt shape is used according to the shape of the intermediate transfer belt. The material of the substrate 201 is not particularly limited as long as it has excellent heat resistance and mechanical strength.

Suitable examples include metals such as aluminum, iron, copper and nickel, alloys such as stainless steel and brass, ceramics such as alumina and silicon carbide, and resins such as polyether ether ketone, polyethylene terephthalate, polybutylene naphthalate, polyesters, polyimides, polyamides, polyamideimides, polyacetals, and polyphenylene sulfides.

When a thermosetting resin or thermoplastic resin is used as the material of the substrate 201, conductive powder such as metal powder, conductive oxide powder, or conductive carbon may be added to impart conductivity. A preferable volume resistivity of the substrate 201 is, for example, from 1.0 × 10⁸ Ω·cm to 1.0 × 10¹¹ Ω·cm. A preferred surface resistivity of the substrate is, for example, from 3.0 × 10⁹ Ω/□ to 3.0 × 10¹² Ω/□.

From the viewpoint of mechanical strength and conductivity, the substrate 201 is preferably a carbon black-added polyimide film or a carbon black-added polyether ether ketone (PEEK), more preferably a carbon black-added polyether ether ketone.

The thickness of the substrate 201 is preferably from 10 µm to 500 µm, more preferably from 30 µm to 150 µm, and even more preferably from 40 µm to 90 µm. A method for manufacturing the substrate is not particularly limited, and known extrusion molding such as cylindrical extrusion molding can be employed.

### Elastic Layer

The substrate 201 has an elastic layer 202 on outer surface thereof. For example, when the substrate has an endless shape, the outer surface of the substrate means the outer peripheral surface of the endless substrate. When the electrophotographic belt is used as an intermediate transfer belt, the elastic layer 202 allows the outer surface of the electrophotographic belt to follow the unevenness of the surface of the recording material having the uneven surface. The elastic layer 202 includes the cured rubber product according to one aspect of the present disclosure.

Considering mechanical strength and flexibility, the thickness of the elastic layer 202 is preferably from 50 µm to 500 µm, more preferably from 100 µm to 400 µm or less, and even more preferably from 200 µm to 300 µm or less.

The manufacturing method of the elastic layer is not particularly limited. For example, a layer of a liquid silicone rubber including the above components (a) to (c) or a layer of a liquid silicone rubber mixture including the liquid silicone rubber and other optional components is formed on the outer surface of the substrate by a known method and the liquid silicone rubber in the layer is cured. A method of curing can be exemplified by a heating method. The heating conditions may be set as appropriate according to the silicone rubber material to be used, and are not particularly limited, but may be from 100°C to 250°C for 0.5 min to 300 min, for example. Heating may be performed in multiple stages with varying temperatures.

In order to bond the substrate 201 and the elastic layer 202 more strongly, the outer surface of the substrate 201 may be coated, as appropriate, with a primer. The primer used here is a coating material in which a silane coupling agent, a silicone polymer, a hydrogenated methylsiloxane, an alkoxysilane, a reaction accelerating catalyst, and a colorant such as red iron oxide are blended and dispersed, as appropriate, in an organic solvent.

A commercially available product can be used as the primer. Primer treatment is performed by applying this primer to the outer surface of the substrate 201 and drying or baking. The primer can be selected, as appropriate, according to the material of the substrate 201, the type of the elastic layer, or the form of the crosslinking reaction.

In particular, when the elastic layer 202 includes many unsaturated aliphatic groups, a primer including hydrosilyl groups is preferably used in order to impart adhesion through reaction with the unsaturated aliphatic groups. Commercially available primers having such characteristics include DY39-051A/B (trade name, manufactured by Dow Corning Toray Co., Ltd.).

Further, when the elastic layer 202 includes many hydrosilyl groups, a primer including unsaturated aliphatic groups is preferably used. A commercially available primer having such characteristics is DY39-067 (trade name, manufactured by Dow Corning Toray Co., Ltd.).

Examples of primers include those containing alkoxy groups. Further, by subjecting the surface of the substrate to surface treatment such as ultraviolet irradiation, the crosslinking reaction between the substrate 201 and the elastic layer 202 can be assisted and the adhesive strength can be further enhanced. The wavelength of the ultraviolet rays and the integrated amount of light when irradiating with the ultraviolet rays are not particularly limited, and may be set, as appropriate, according to the material of the primer.

The thickness of the primer layer may be set, as appropriate, according to the purpose of the primer layer, and is not particularly limited, but may be from 0.1 µm to 10 µm, for example.

Examples of primers other than the above include X-33-156-20, X-33-173A/B, X-33-183A/B (all trade names, manufactured by Shin-Etsu Chemical Co., Ltd.) and DY39-90A/ B, DY39-110A/B, DY39-125A/B, DY39-200A/B (all trade names, manufactured by Dow Corning Toray Co., Ltd.).

### Surface Layer

The surface layer of the electrophotographic belt is preferably resistant to wear caused by rubbing against recording media such as paper and various contact members such as a drum and preferably has low adhesion to prevent toner or the like from sticking thereto. The resin used for the surface layer preferably has low adhesion, and is not particularly limited, examples thereof including fluorine-containing urethane resin, fluorine rubber, and siloxane-modified polyimides. Among these, fluorine-containing urethane resin is preferable as the surface layer of the intermediate transfer belt from the viewpoint of not impairing the elastic function of the elastic layer.

The thickness of the surface layer is preferably from 0.5 µm to 20 µm, more preferably from 1 µm to 10 µm. Where the thickness of the surface layer is 0.5 µm or more, it becomes easier to suppress the disappearance of the toner due to wear of the surface layer during use. Moreover, where the thickness of the surface layer is 20 µm or less, the elastic function of the elastic layer is not inhibited. The surface layer may include the above-described conductive powder, if necessary. From the viewpoint of adhesion and mechanical strength, the content of the conductive powder in the surface layer is preferably 30% by mass or less relative to the surface layer. A primer layer may be provided between the elastic layer and the surface layer, if necessary. The thickness of the primer layer is preferably from 0.1 µm to 15 µm, more preferably from 0.5 µm to 10 µm, from the viewpoint of not inhibiting the elastic function.

### Electrophotographic Image Forming Apparatus

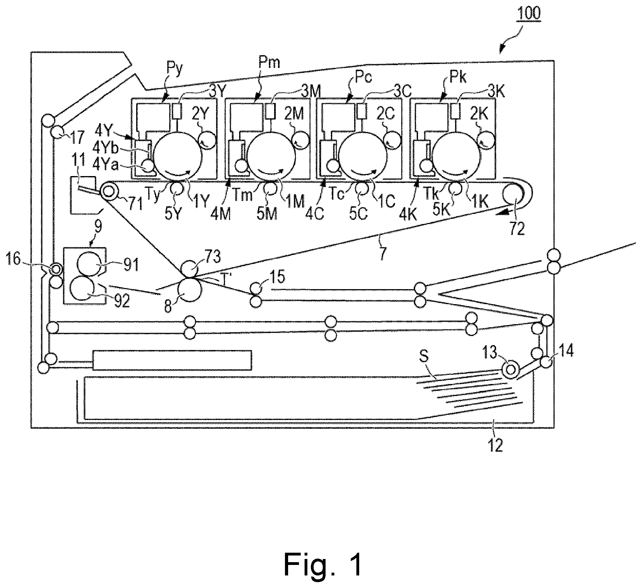

An electrophotographic image forming apparatus according to an aspect of the present disclosure includes the electrophotographic member as an intermediate transfer member (intermediate transfer belt). One aspect of the present disclosure relates to an electrophotographic image forming apparatus including the intermediate transfer belt. An example of an embodiment of an electrophotographic image forming apparatus will be described with reference to FIG. 1. The present disclosure is not limited to the following description.

An electrophotographic image forming apparatus 100 in FIG. 1 is a color electrophotographic image forming apparatus (color laser printer). The electrophotographic image forming apparatus 100 includes an electrophotographic belt according to one aspect of the present disclosure as an intermediate transfer belt 7. Image forming units Py, Pm, Pc, and Pk for yellow (Y), magenta (M), cyan (C), and black (K) are arranged in this order along the flat portion of the intermediate transfer belt 7 in the movement direction thereof.

Here, 1Y, 1M, 1C, and 1K are respective electrophotographic photosensitive members, 2Y, 2M, 2C and 2K are respective charging rollers; 3Y, 3M, 3C and 3K are respective laser exposure devices; 4Y, 4M, 4C and 4K are respective developing devices, and 5Y, 5M, 5C, and 5K are respective primary transfer rollers. Since the image forming units Py, Pm, Pc, and Pk have the same basic configuration, the details of the image forming unit will be explained by referring only to the yellow image forming unit Py.

The yellow image forming unit Py has the drum-type electrophotographic photosensitive member (hereinafter also referred to as "photosensitive drum" or "first image bearing member") 1Y as an image bearing member. The photosensitive drum 1Y is formed by using an aluminum cylinder as a substrate and laminating a charge generating layer, a charge transport layer and a surface protection layer in this order thereon.

Also, the yellow image forming unit Py is equipped with the charging roller 2Y as charging means. By applying a charging bias to the charging roller 2Y, the surface of the photosensitive drum 1Y is uniformly charged.

A laser exposure device 3Y as image exposure means is arranged above the photosensitive drum 1Y. The laser exposure device 3Y scans and exposes the uniformly charged surface of the photosensitive drum 1Y according to image information to form an electrostatic latent image of the yellow color component on the surface of the photosensitive drum 1Y.

The electrostatic latent image formed on the photosensitive drum 1Y is developed with toner, which is a developer, by the developing device 4Y as developing means. That is, the developing device 4Y includes a developing roller 4Ya as a developer carrying member and a regulating blade 4Yb as a developer amount regulating member, and contains yellow toner as the developer.

The developing roller 4Ya supplied with yellow toner is in light pressure contact with the photosensitive drum 1Y in the developing section, and is rotated in the forward direction with a speed difference from the photosensitive drum 1Y. The yellow toner conveyed to the developing section by the developing roller 4Ya adheres to the electrostatic latent image formed on the photosensitive drum 1Y as a result of applying a developing bias to the developing roller 4Ya. A visible image (yellow toner image) is thus formed on the photosensitive drum 1Y.

The intermediate transfer belt 7 is stretched around a drive roller 71, a tension roller 72, and a driven roller 73, and is moved (rotated) in the direction of the arrow in the drawing while being in contact with the photosensitive drum 1Y.

The yellow toner image formed on the photosensitive drum 1Y (on the first image bearing member) that has reached the primary transfer section Ty is primarily transferred onto the intermediate transfer belt 7 by a primary transfer member (primary transfer roller 5Y) arranged to face the photosensitive drum 1Y with the intermediate transfer belt 7 interposed therebetween.

Similarly, the image forming operation described above is performed in each of the magenta (M), cyan (C), and black (K) image forming units Pm, Pc, and Pk along with the movement of the intermediate transfer belt 7. Toner images of four colors of yellow, magenta, cyan, and black are superimposed on the intermediate transfer belt 7.

The four-color toner layers are transported along with the movement of the intermediate transfer belt 7 and are collectively transferred onto a transfer material S (hereinafter also referred to as a "second image bearing member"), which is transported at a predetermined timing, by a secondary transfer roller 8 as secondary transfer means at a secondary transfer section T'. In such secondary transfer, a transfer voltage of several kV is normally applied in order to ensure a sufficient transfer rate, but at that time, discharge may occur in the vicinity of the transfer nip. In some cases, this discharge contributes to deterioration of the surface properties of the intermediate transfer member.

The transfer material S is supplied from a cassette 12 in which the transfer material S is accommodated to the transport path by a pickup roller 13. The transfer material S supplied to the transport path is transported to the secondary transfer section T' in synchronization with the four-color toner image transferred onto the intermediate transfer belt 7 by a transport roller pair 14 and a registration roller pair 15.

The toner image transferred to the transfer material S is fixed by a fixing device 9 to become, for example, a full-color image. The fixing device 9 has a fixing roller 91 provided with a heating means and a pressure roller 92, and fixes the unfixed toner image on the transfer material S by heating and pressurizing the image. After that, the transfer material S is discharged out of the apparatus by a pair of transport rollers 16, a pair of discharge rollers 17, and the like.

A cleaning blade 11, which is cleaning means for the intermediate transfer belt 7, is disposed downstream of the secondary transfer section T' in the driving direction of the intermediate transfer belt 7, and removes the untransferred toner, which was not transferred onto the transfer material S at the secondary transfer portion T' and remained on the intermediate transfer belt 7.

The process of electrically transferring, as described above, the toner image from the photosensitive member 1 to the intermediate transfer belt 7 and from the intermediate transfer belt 7 to the transfer material S is performed repeatedly. Further, by repeating recording on a large number of transfer materials S, the electrical transfer process is further performed repeatedly.

By using the electrophotographic member as the intermediate transfer belt 7 in the electrophotographic image forming apparatus, it is possible to perform good toner transfer during secondary transfer, and a transfer system that maintains good image quality even after long-term use can be realized.

According to at least one aspect of the present disclosure, it is possible to obtain an electrophotographic belt having a more flexible elastic layer while maintaining high flame retardance. Moreover, according to at least one aspect of the present disclosure, it is possible to obtain a cured rubber product having high flame retardance and flexibility. Furthermore, according to at least one aspect of the present disclosure, it is possible to obtain an electrophotographic image forming apparatus capable of forming a high-quality electrophotographic images even on thick paper or embossed paper having surface unevenness exceeding 100 µm.

### Examples

The present disclosure will be specifically described below using examples. The present disclosure is not limited to the following examples. In the following formulations, parts are by weight unless otherwise specified.

### Example 1

### Preparation of Substrate

The following materials were put into a twin-screw kneader (trade name: PCM30, manufactured by Ikegai Co., Ltd.) using gravimetric feeders and kneaded to obtain pellets thereof. The set temperature of the cylinder of the twin-screw kneader was 320°C at the material charging portion, and 360°C at the downstream side of the cylinder and at the die. The screw rotation speed of the twin-screw kneader was set to 300 rpm, and the material feed rate was set to 8 kg/h.
- Polyether ether ketone
   (product name: VICTREX PEEK 450G, manufactured by Victrex Plc): 80 parts
- Acetylene black
   (product name: Denka Black granular product, manufactured by Denka Co., Ltd.): 20 parts

Then, the obtained pellets were cylindrically extrusion-molded to produce an endless substrate. The cylindrical extrusion molding was performed using a single-screw extruder (trade name: GT40, manufactured by Plastic Engineering Laboratory Co., Ltd.) and a cylindrical die having a circular opening with a diameter of 300 mm and a gap of 1 mm. Specifically, using a gravimetric feeder, the pellets were supplied to the single-screw extruder at a feed rate of 4 kg/h. The set temperature of the cylinder of the single-screw extruder was set to 320°C at the material charging portion, and 380°C at the downstream side of the cylinder and at the cylindrical die. The molten resin discharged from the single-screw extruder was passed through a gear pump, extruded from the cylindrical die, and taken up at a speed of 60 µm in thickness by a cylindrical take-up machine. The molten resin was cooled and solidified by coming into contact with a cooling mandrel provided between the cylindrical die and the cylindrical take-up machine during the take-off process. The solidified resin was cut to a width of 400 mm by a cylinder cutting machine installed at the bottom of the cylindrical take-up machine to obtain an endless substrate.

### Preparation of Liquid Silicone Rubber Mixture for Forming Elastic Layer

An addition-curable liquid silicone rubber was prepared as follows.

To obtain the component (a),
an organopolysiloxane A having unsaturated aliphatic groups only at the ends
(trade name: SF0060-4502, manufactured by Shenzhen Square Silicone Co., Ltd., number-average molecular weight 52000 (converted to polystyrene), molar equivalent of vinyl groups 0.06 mmol/g), and
an organopolysiloxane B having unsaturated aliphatic groups at ends and side chains
(trade name: SF0085-1703, manufactured by Shenzhen Square Silicone Co., Ltd., number-average molecular weight 89000 (converted to polystyrene), molar equivalent of vinyl groups 0.32 mmol/g) were prepared.

The organopolysiloxane A and the organopolysiloxane B were mixed at a compounding ratio (by mass) of 80 : 20.

Further, as the component (b), methylhydrogenpolysiloxane (trade name: HMS-301, manufactured by Gelest Co., Ltd., number average molecular weight 1300 (converted to polystyrene), molar equivalent of Si-H groups 3.60 mmol/g) having at least two Si-H groups in one molecule was prepared as an organopolysiloxane having Si-H groups. "HMS-301" has a structure represented by the structural formula 4, and all R₁ groups are methyl groups.

A total of 4.0 parts of component (b) was added to 100 parts of component (a), and the components were thoroughly mixed. The ratio (H/Vi) of the number of Si-H groups to the number of unsaturated aliphatic groups (vinyl groups) was 1.4.

Furthermore, 0.07 parts of addition curing reaction catalyst (platinum catalyst: platinum carbonylcyclovinylmethylsiloxane complex) and 0.05 parts of inhibitor (1-ethynyl-1-cyclohexanol) were added to and thoroughly mixed with 100 parts of component (a). A liquid silicone rubber according to this example was thus prepared.

Next, per 100 parts of component (a), 42.0 parts of magnesium hydroxide particles (trade name: KISUMA 5P, manufactured by Kyowa Chemical Industry Co., Ltd.) as inorganic particles and 10.0 parts of a black silicone colorant (trade name: LIM Color 02; manufactured by Shin-Etsu Chemical Co., Ltd., carbon black content: 15% to 20% by mass) were added to the resulting liquid silicone rubber.

After that, stirring and defoaming were performed using a planetary stirring and defoaming device (trade name: HM-500, manufactured by Keyence Corporation) to obtain an addition-curable liquid silicone rubber mixture. The carbon black content per 100 parts of component (a) in the addition-curable liquid silicone rubber mixture obtained was from 1.5 parts to 2.0 parts.

Subsequently, the outer surface of the substrate was subjected to ultraviolet irradiation treatment (excimer lamp (wavelength: 172 nm), integrated quantity of light: 550 mJ/cm²), and then a primer (trade name: DY39-051, manufactured by Dow Corning Toray Co., Ltd.) applied so as to have a thickness of 1 µm after drying, and was dried by heating. The substrate having the primer layer formed on the outer surface was attached to a cylindrical core, and a ring nozzle for discharging rubber was attached coaxially with the core.

A layer of the addition-curable liquid silicone rubber mixture was formed on the substrate by supplying the addition-curable liquid silicone rubber mixture to the ring nozzle using a liquid feed pump and discharging the mixture through a slit. At this time, the relative movement speed and the discharge amount of the liquid feed pump were adjusted so that the elastic layer after curing had a thickness of 265 µm. In a state of being attached to the core, the addition-curable liquid silicone rubber mixture layer was placed in a heating furnace and heated at 130°C for 15 min and then at 180°C for 60 min to cure the addition-curable liquid silicone rubber mixture layer to form an elastic layer.

### Formation of Surface Layer

A fluorine-containing polyurethane resin liquid (trade name: Emralon T-861, manufactured by Henkel Japan Ltd.) in which polytetrafluoroethylene was dispersed in a polyurethane dispersion was prepared.

Next, after subjecting the outer surface of the elastic layer to a hydrophilization treatment by excimer UV irradiation, the layer was fitted to the core, and the urethane resin liquid was coated using a spray gun (trade name: W-101, manufactured by Anest Iwata Corporation) while the core was rotated at 200 rpm. The coated elastic layer was placed in a heating furnace at 130°C and 30-min curing was performed. An electrophotographic belt No. 1 having a 3 µm thick surface layer on the elastic layer was thus obtained.

### Examples 2 to 6 and Comparative Examples 1 to 5 and Reference Example 1

Electrophotographic belts No. 2 to No. 12 according to Examples 2 to 6, Comparative Examples 1 to 5, and Reference Example 1 were obtained in the same manner as in Example 1, except that the compounding ratio of organopolysiloxane A and organopolysiloxane B was changed as shown in Table 1 below and the amount of component (b) was changed so that the (H/Vi) ratio of the number of Si-H groups assumed numerical values shown in Table 1 below.

**[Table 1]**

| | Electrophotographic belt No. | Compounding ratio of organopolysiloxane | | H/Vi |
|---|---|---|---|---|
| | | A | B | |
| Example 1 | 1 | 80 | 20 | 1.4 |
| Example 2 | 2 | 80 | 20 | 0.9 |
| Example 3 | 3 | 80 | 20 | 0.7 |
| Example 4 | 4 | 60 | 40 | 1.4 |
| Example 5 | 5 | 60 | 40 | 0.5 |
| Example 6 | 6 | 90 | 10 | 1.5 |
| Comparative Example 1 | 7 | 80 | 20 | 0.6 |
| Comparative Example 2 | 8 | 60 | 40 | 0.4 |
| Comparative Example 3 | 9 | 29 | 71 | 0.6 |
| Comparative Example 4 | 10 | 0 | 100 | 0.8 |
| Comparative Example 5 | 11 | 0 | 100 | 0.5 |
| Reference Example 1 | 12 | 80 | 20 | 1.6 |

### Evaluation

For the electrophotographic belts No. 1 to No. 12, the extract, the side chain ratio of the extract, the elastic modulus of the elastic layer, the flame retardance, and the transferability to textured paper were evaluated. The evaluation methods are described below.

### Preparation of Elastic Layer Sample

For the measurement of physical properties of the elastic layer, a sample of the elastic layer prepared from the electrophotographic belt was prepared by the following method. First, the electrophotographic belt was cut in a direction orthogonal to the circumferential direction to expose a cross section for the entire thickness. The thicknesses of the surface layer, primer layer and substrate were measured from the cross section. Next, from the electrophotographic belt, a portion on the surface layer side was cut by a cryo method from a position at a depth of 5 µm from the surface of the elastic layer facing the surface layer. Next, a portion of the elastic layer on the substrate side was cut by a cryo method from a position at a depth of 10 µm from the surface of the elastic layer facing the substrate. Thus, an elastic layer sample having a thickness of 250 µm was obtained.

### Ratio of Extract

The mass ratio of the extract, which is the unreacted portion of the elastic layer, was calculated by weighing the mass of the test piece conforming to JIS K6258:2016 before immersion and after post-immersion drying. Specifically, 1 g of a specimen cut from the elastic layer sample prepared above (or 1 g of a sample taken from the cured rubber product in the case of cured rubber product) was immersed in 50 ml of toluene at a temperature of 23°C for 24 h, and then the specimen was taken out from toluene. The specimen after immersion was dried at a temperature of 40°C under an absolute pressure of 20 kPa until a constant mass was reached, the mass of the specimen after drying was weighed, and the difference between the mass of the specimen after drying and the mass of the specimen before immersion was taken as the mass of the extract. The mass of the extract was divided by the mass of the specimen (1 g) and multiplied by 100 to obtain the amount of the extract (% by mass).

### Side Chain Ratio of Unsaturated Aliphatic Groups in Extract

The ratio B/(A + B) of the number of moles of the second structure having a vinyl group in the side chain portion and the first structure having a vinyl group in the end portion in the extract was calculated as follows. Specifically, toluene was evaporated by an evaporator from the solution after immersion describe in the Ratio of Extract hereinabove to take out an extract that is an unreacted component, and the extract was subjected to hydrogen nuclear measurement (¹H-NMR) using a nuclear magnetic resonance apparatus (apparatus name: Avance 400, manufactured by BRUKER). CDCl₃ (deuterated chloroform) was used as a solvent, and CHCl₃ in CDCl₃ was 7.24 ppm as a chemical shift reference. The obtained NMR chart is shown in FIG. 4.

Then, a value obtained by multiplying the integrated value of the peaks in the chemical shift range of from 6.06 to 6.15 ppm, which were derived only from the hydrogen atoms of the vinyl group present at the end, by 3, was taken, as described above, as the number of moles A of the vinyl groups present at the ends. In addition, the value obtained by subtracting the value obtained by multiplying the integrated values of the peaks in the range of from 6.06 ppm to 6.15 ppm by two from the integrated value of the peaks appearing in the chemical shift range of from 5.68 ppm to 6.03 ppm was taken as the number of moles B of the vinyl groups present in the side chains. Using these values, the side chain ratio (B/(A + B)) of vinyl groups in the extract was calculated.

### Measurement of Elastic Modulus

The elastic modulus of the elastic layer was measured on a specimen having a thickness of 250 µm that was cut out using a punching die (JIS 3 dumbbell die) from the elastic layer sample prepared as described above. The measurement was performed using a tensile tester (device name: Strograph EII-L1, manufactured by Toyo Seiki Seisakusho Co., Ltd.) according to Japanese Industrial Standard (JIS) 6251:2017. The measurement was performed at room temperature (25°C) at a pulling speed of 500 mm/min. A graph was drawn from the measurement results with the strain of the sample piece on the horizontal axis and the tensile stress on the vertical axis, and the slope of the graph obtained when the measured data were linearly approximated in the strain range of from 0% to 100% was taken as the elastic modulus.

### Evaluation of Flame Retardance

The burning time was measured by a flame retardance test based on UL94 VTM standard. Specifically, five strip-shaped specimens having a width of 50 mm, a length of 200 mm, and a thickness of 250 µm were prepared from the elastic layer sample prepared as described above. Each of the prepared specimens was rolled into a cylindrical shape so that the side on which the substrate was laminated was on the inside to obtain a cylindrical body. The flame of a gas burner adjusted to a flame height of 20 mm was brought into contact with the lower end of the cylindrical body in the longitudinal direction. The flame contact time was set to 3 sec, and the afterflame time of the cylinder after the flame contact was measured. Of the five cylinders, the longest afterflame time was taken as the burning time in this evaluation. When the burning time reached 60 sec, the evaluation was stopped at that time, and the burning time was described as "60 sec".

### Evaluation Method for Textured Paper Transferability (Secondary Transfer Efficiency)

The intermediate transfer belts 200 of Examples and Comparative Examples were installed instead of the intermediate transfer belt 7 installed in a full-color electrophotographic image forming apparatus (trade name: imagePRESS C800, manufactured by Canon Inc.).

Then, a blue solid image was output on A4 size textured paper (trade name: Lezac 66, surface unevenness 140 µm), and the transfer efficiency was measured. For image formation, cyan and magenta developers loaded in the print cartridges of the electrophotographic image forming apparatus were used. Further, the image output was performed under normal temperature and normal humidity (temperature of 25°C, relative humidity of 55%) environment.

For the transfer efficiency, the apparatus was stopped during transfer from the photosensitive member to the intermediate transfer belt, and the toner laid-on level M1 (mg/cm²) on the photosensitive member before the transfer process and the toner laid-on level M2 (mg/cm²) on the photosensitive member after the transfer process were measured.

To measure the toner laid-on level, first, the toner on the photosensitive member was sucked in an area of 20.0 cm² with a suction device (VF-50 (manufactured by Amano Co., Ltd.)) equipped with a filter (THIMBLE FILTER (manufactured by ADVANTEC)), and the amount of toner trapped in the filter was weighed. Next, the value obtained by dividing the amount of toner trapped by the filter by the suction area (20.0 cm²) was calculated as the toner laid-on level. From the obtained toner laid-on levels, (M1 - M2) × 100/M1 was defined as the transfer efficiency (%).

The transfer efficiency of 90% or higher is rated A, and the transfer efficiency of less than 90% is rated B.

### Evaluation Results

The results of measuring and evaluating the ratio of the extract, the side chain ratio of the extract, the elastic modulus of rubber, the flame retardance time, and the transferability to textured paper for the intermediate transfer belts No. 2 to No. 12 of Examples and Comparative Examples are shown in Table 2.

**[Table 2]**

| | Electrophotographic belt No. | Ratio of extract | Side chain ratio of extract | Elastic modulus of rubber | Flame retardance | Secondary transfer efficiency | |
|---|---|---|---|---|---|---|---|
| | | %by mass | Molar ratio | MPa | Burn time (s) | % | Evaluation rank |
| Example 1 | 1 | 6 | 0.2 | 1.00 | 10 | 91 | A |
| Example 2 | 2 | 11 | 0.2 | 0.45 | 15 | 96 | A |
| Example 3 | 3 | 20 | 0.2 | 0.18 | 21 | 98 | A |
| Example 4 | 4 | 7 | 0.5 | 1.00 | 13 | 91 | A |
| Example 5 | 5 | 20 | 0.5 | 0.30 | 28 | 97 | A |
| Example 6 | 6 | 3 | 0.1 | 1.00 | 7 | 91 | A |
| Comparative Exam ple 1 | 7 | 35 | 0.2 | 0.06 | 32 | 99 | A |
| Comparative Example 2 | 8 | 22 | 0.5 | 0.23 | 33 | 97 | A |
| Comparative Example 3 | 9 | 13 | 0.7 | 1.00 | 60 | 91 | A |
| Comparative Example 4 | 10 | 3 | 0.9 | 2.30 | 40 | 80 | B |
| Comparative Example 5 | 11 | 18 | 0.9 | 1.00 | 60 | 91 | A |
| Reference Example 1 | 12 | 2 | 0.2 | 1.60 | 7 | - | - |

In the table, the ratio of the extract is the mass ratio of the extract after a 1 g sample collected from the elastic layer is immersed in 50 ml of toluene at a temperature of 23°C for 24 h in accordance with Japanese Industrial Standard (JIS) K6258:2016. The side chain ratio of the extract indicates the ratio (B/(A + B)) of the number of moles of the first structure and the second structure. The elastic modulus of rubber indicates the elastic modulus of the elastic layer at 23°C.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

An electrophotographic belt comprising: a substrate and an elastic layer on an outer peripheral surface of the substrate, the elastic layer comprising a cured rubber product including a cured silicone rubber product, an elastic modulus of the elastic layer at a temperature of 23°C being 1.00 MPa or less, wherein when 1 g sample collected from the elastic layer is immersed in 50 ml of toluene at a temperature of 23°C for 24 hours in accordance with Japanese Industrial Standard (JIS) K6258:2016, an extract of 3% by mass to 20% by mass with respect to the sample is extracted, and a burning time of the elastic layer in a burn test in accordance with UL94 VTM standard is 30 seconds or less.

## Claims

1. An electrophotographic belt comprising:
a substrate and an elastic layer on an outer peripheral surface of the substrate,
the elastic layer comprising a cured rubber product including a cured silicone rubber product,
an elastic modulus of the elastic layer at a temperature of 23°C being 1.00 MPa or less,
wherein
when 1 g sample collected from the elastic layer is immersed in 50 ml of toluene at a temperature of 23°C for 24 hours in accordance with Japanese Industrial Standard (JIS) K6258:2016, an extract of from 3% by mass to 20% by mass with respect to the sample is extracted, and
a burning time of the elastic layer in a burn test in accordance with UL94 VTM standard is 30 seconds or less.

2. The electrophotographic belt according to claim 1, wherein the extract comprises at least two organopolysiloxanes selected from the group consisting of:
an organopolysiloxane having a first structure represented by a following formula (1),
an organopolysiloxane having a second structure represented by a following formula (2), and
an organopolysiloxane having a first structure represented by the following formula (1) and a second structure represented by the following formula (2) 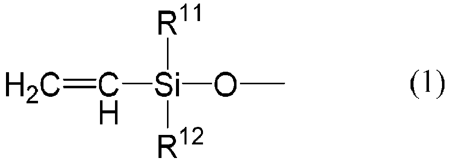 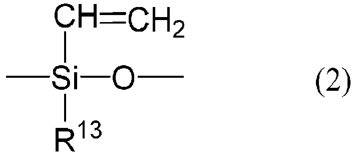
where in formulas (1) and (2), R¹¹, R¹², and R¹³ each independently represent an unsubstituted or substituted monovalent hydrocarbon group that does not contain an unsaturated aliphatic group.

3. The electrophotographic belt according to claim 2, wherein B/(A + B) is from 0.1 to 0.5, where A is a number of moles of the first structure in the extract, and B is a number of moles of the second structure in the extract.

4. The electrophotographic belt according to claim 2 or 3, wherein the unsaturated aliphatic group is a vinyl group.

5. The electrophotographic belt according to any one of claims 1 to 4, wherein the elastic modulus of the elastic layer is 0.18 MPa or more.

6. The electrophotographic belt according to any one of claims 1 to 5, wherein the cured rubber product is a cured product of an addition-curable liquid silicone rubber including (a) an organopolysiloxane having an unsaturated aliphatic group, (b) an organopolysiloxane having a hydrosilyl group, and (c) a hydrosilylation catalyst.

7. The electrophotographic belt according to claim 6, wherein a molar ratio (H/Vi) in the addition-curable liquid silicone rubber is from 0.5 to 1.5, the molar ratio (H/Vi) being a molar ratio of a moiety Si-H of which a hydrogen atom is directly bonded to a silicon atom to the unsaturated aliphatic group.

8. The electrophotographic belt according to any one of claims 1 to 7, wherein the elastic layer has a thickness of from 50 µm to 500 µm.

9. The electrophotographic belt according to any one of claims 1 to 8, wherein the electrophotographic belt is an intermediate transfer belt.

10. An electrophotographic image forming apparatus comprising the electrophotographic belt according to any one of claims 1 to 9.

11. A cured rubber product comprising a cured silicone rubber product,
the cured rubber product having an elastic modulus at a temperature of 23°C of 1.00 MPa or less, wherein
when a 1 g sample collected from the cured rubber product is immersed in 50 ml of toluene at a temperature of 23°C for 24 hours in accordance with Japanese Industrial Standard (JIS) K6258:2016, an extract of from 3% by mass to 20% by mass with respect to the sample is extracted, and
a burning time of the cured rubber product in a burn test in accordance with UL94 VTM standard is 30 seconds or less.

12. The cured rubber product according to claim 11, wherein the extract comprises at least two organopolysiloxanes selected from the group consisting of:
an organopolysiloxane having a first structure represented by a following formula (1),
an organopolysiloxane having a second structure represented by a following formula (2), and
an organopolysiloxane having a first structure represented by the following formula (1) and a second structure represented by the following formula (2) 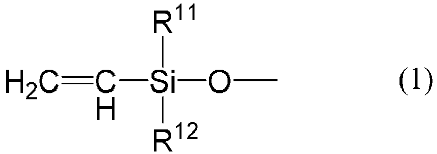 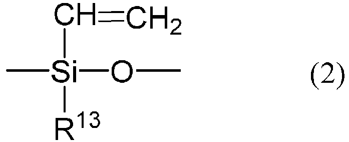
where in formulas (1) and (2), R¹¹, R¹², and R¹³ each independently represent an unsubstituted or substituted monovalent hydrocarbon group that does not contain an unsaturated aliphatic group.

13. The cured rubber product according to claim 12, wherein B/(A + B) is from 0.1 to 0.5, where A is a number of moles of the first structure in the extract, and B is a number of moles of the second structure in the extract

14. The cured rubber product according to any one of claims 11 to 13, wherein the elastic modulus of the cured rubber product is 0.18 MPa or more.

15. The cured rubber product according to any one of claims 11 to 14, wherein the cured rubber product is a cured product of an addition-curable liquid silicone rubber including (a) an organopolysiloxane having an unsaturated aliphatic group, (b) an organopolysiloxane having a hydrosilyl group, and (c) a hydrosilylation catalyst.
